# EUROPEAN PATENT APPLICATION

(11) **EP 1 803 986 A2**
(43) Date of publication of application: **04.07.2007**
(21) Application number: 07000030.2
(22) Date of filing: 02.01.2007
(51) Int. Cl.: F16M 11/00, H01R 33/00

(54) **Integrated power center and mount for flat screen video displays and projectors**

(30) Priority: 03.01.2006 US 325617
(71) Applicant: MONSTER CABLE PRODUCTS, INC., Brisbane CA 94005 (US)
(72) Inventor: Lee, Noel, Las Vegas NV 89145-8639 (US)
(74) Representative: HOFFMANN EITLE

(57) **Abstract**

A power center for use with video display devices having a housing 2 for electronic circuitry 3 for preventing electric surges adapted for attachment to a flat surface with a means for connection 4 to a source of electric current and power outlets 6, 7 attached to said housing for providing power to a video display device. A mount 21 is attached to housing 2 for attaching a video display or projector. A variety of different mounts 21 are illustrated for specific applications.

## Description

The present invention generally relates to video flat screen displays. More particularly, the present invention relates to an integrated mounting system for flat screen video displays with a power center adapted for such displays. Yet more particularly, the present invention relates to power centers for flat screen video displays with articulated mounts.

A wide variety of mounts have been proposed for use with flat screen video displays such as plasma displays and liquid crystal displays (LCD). A number of mounts have also been designed for use with video projectors for use with front projection flat screens. Power centers for such displays have also been proposed. A problem with all of such power centers and mounts is the presence of unsightly wires connecting such displays and the undue multiplication of components. A power center for a plasma display is quite different from one for a projection display, for example. There is a long-standing need for a power center for a flat screen video display with includes a mount for the type of display for which it is suitable.

The present invention addresses the current needs for a system to power and mount a flat screen video display. Embodiments of the invention are disclosed for mounting to a table, wall, ceiling or under a counter. Embodiments of the invention are capable of freedom of movement in one two or three dimensions. A variety of mounting arms may be associated with the power center for different applications.

Prior art attempts to mount flat screen monitors have usually been either cheap, flimsy mounts which come with a monitor or more expensive brackets used to mount heavy plasma screen monitors including television receivers to a wall. A large number of very expensive projector mounts have also been devised but none of these projector mounts include power centers.

Further, in the prior art, a number of power centers have been devised which are designed to fit under a cathode ray tube (CRT) monitor. Such power centers do not however include mounting means.

The present invention satisfies the needs discussed above. The present invention generally relates to power centers for flat screen monitors and projectors. More particularly, the present invention relates to a power center device capable of mounting to a variety of monitor and projector types as well as different surfaces.

Upon reading the above description, various alternative embodiments will become obvious to those skilled in the art. These embodiments are to be considered within the scope and spirit of the subject invention, which is only to be limited by the claims which follow their equivalents.

For a better understanding of the present invention, reference is made to the below referenced accompanying Drawing(s). Reference numbers refer to the same or equivalent parts of the present invention throughout the several figures of the Drawing(s).

Figure 1 is a perspective view of the power center portion of the invention.

Figure 2 is a perspective view of the figure 1 embodiment with the addition of a flat profile wall mount.

Figure 3 is a perspective view of the figure 1 embodiment with the addition of an extension arm mount.

Figure 4 is a perspective view of the figure 1 embodiment with the addition of an articulated extension arm mount.

Figure 5 is a perspective view of another embodiment suitable for the power center portion of the invention for use in an undercounter application in accordance with the present invention.

Figure 6 is a perspective view of the figure 5 embodiment suitable for the power center portion of the invention for use in an undercounter application in accordance with the present invention including a cable management option.

Figure 7 is a perspective view of the figure 5 embodiment suitable for the power center portion of the invention for use in an undercounter or ceiling application in accordance with the present invention.

Figure 8 is a perspective view of the figure 5 embodiment suitable for the power center portion of the invention for use in an undercounter or ceiling application in accordance with the present invention including a cable management option.

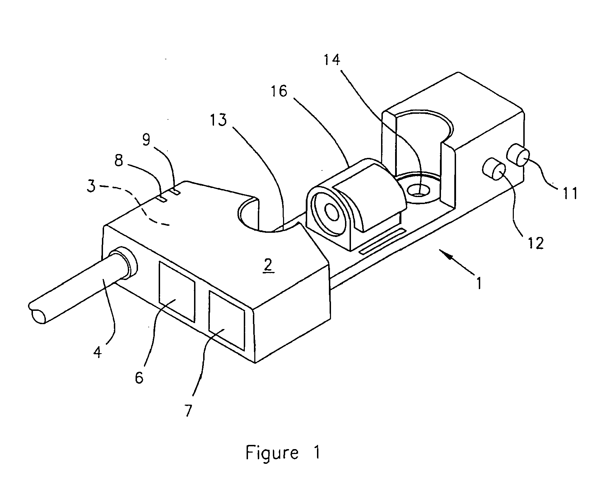

Figure 1 is a perspective view of the power center portion of the invention. Power center 1 includes a housing 2. Housing 2 includes electronic circuitry 3 such as surge protection, voltage stabilization, conditioning, remote control, power monitoring, power cleaning, power filtering, IR/RF repeaters, amplifiers, networking, audio - video receivers and additional plug outlets (not shown). A power supply cord 4 provides a means to connect the circuitry to household power supply mains (not shown). Power outlet sockets 6 and 7 in housing 2 provide connection points to provide power to a monitor or projector (not shown). Housing 2 may also include indicators 8 and 9. Indicator 8 could be a light-emitting diode (LED), an incandescent bulb or gas discharge bulb to show that the circuitry is providing protection. Indicator 9 could also be a LED, an incandescent bulb or gas discharge bulb to indicate that power is being received through power supply cord 4. Housing 2 may also be provided with coaxial cable connectors 11 and 12 to allow protection from lightning or other surges. Housing 2 is mountable to a wall or table by means of mounting holes 13 and 14. Conventional mounting means such as screws or anchors may be used in holes 13 and 14 to mount to a solid surface. Housing 2 further includes an attachment point 16 for attachment of a mounting means (not shown) to connect housing 2. In this embodiment attachment point 16 is a pivot boss with a hole which acts as a bearing.

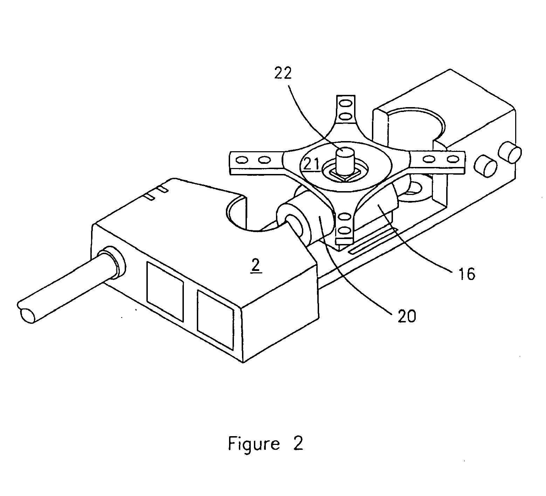

Figure 2 is a perspective view of the figure 1 embodiment with the addition of a flat profile wall mount. Figure 2 is identical to figure 1 except that there is a very short arm 20 attached to attachment point 16 in rotatable engagement at one end. A mounting plate 21 is attached to the other end of arm 20. In this embodiment plate 21 is adapted for attachment to a flat screen monitor and may be rotated relative to housing 2 by adjustment of a nut 22.

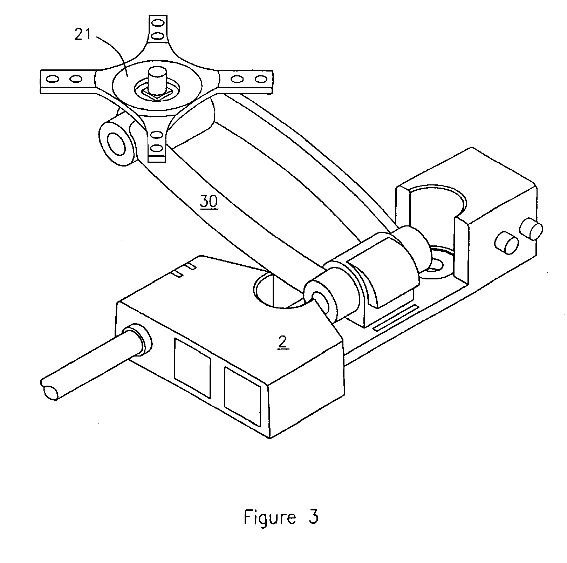

Figure 3 is a perspective view of the figure 1 embodiment with the addition of an extension arm mount. The figure 3 embodiment is thus identical to that of figure 2 except that extension ann 30 is much longer than arm 20 in the figure 2 embodiment. This embodiment is usable on a wall but is also usable on a desk or table since mounting plate 21 may be moveable normal to housing 2. This embodiment may also be mounted to a ceiling for use with either a wide screen monitor or a projector.

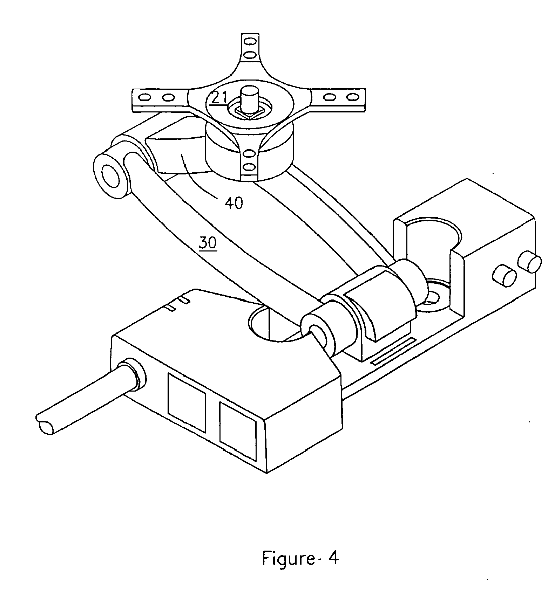

Figure 4 is a perspective view of the figure 1 embodiment with the addition of an articulated extension arm mount. The figure 4 embodiment is thus identical to that of figure 3 except that articulation arm 40 is connected between arm 30 and mounting plate 21. This embodiment is also usable on a wall but is also usable on a desk or table since mounting plate 21 may be move normal to housing 2. This embodiment may also be mounted to a ceiling for use with either a wide screen monitor or a projector. This embodiment provides the greatest possible extension length.

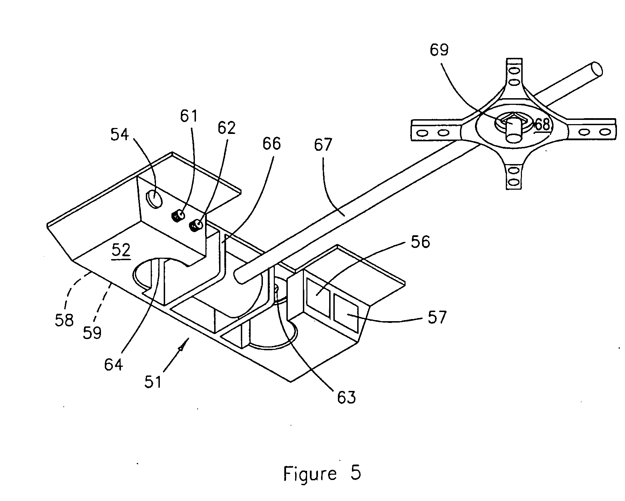

Figure 5 is a perspective view of another embodiment of the power portion of the invention for use in an undercounter application in accordance with the present invention. Power center 51 includes a housing 52. Housing 52 includes electronic circuitry such as surge protection, voltage conditioning, remote control connections (not shown). A power supply cord grommet 54 provides a connection point for a power cord (not shown), a means to connect the circuitry to household power supply mains(not shown). Power outlet sockets 56 and 57 in housing 52 provide connection points to provide power to a monitor or projector (not shown). Housing 52 may also include indicators 58 and 59 on the front of the housing. Indicator 58 could be a light-emitting diode (LED) to show that the circuitry is providing protection. Indicator 59 could also be a LED to indicate that power is being received through power supply cord grommet 54. Housing 52 may also be provided with coaxial cable connectors 61 and 62 to allow protection from lightning or other surges. Housing 52 is mountable to the underside of a counter or the like by means of mounting holes. 63 and 64. Conventional mounting means such as screws, bolts or anchors may be used in holes 63 and 64 to mount to the underside of a cabinet. Housing 52 further includes an attachment point 66 for attachment of a mounting means such as bar 67 to connect with housing 52. In this embodiment attachment point 66 is a pivot boss with a hole which acts as a bearing. A mounting plate 68 is slidably attached to bar 67. In this embodiment plate 68 is adapted for attachment to a flat screen monitor and may be rotated relative to housing 52 by adjustment of a nut 69.

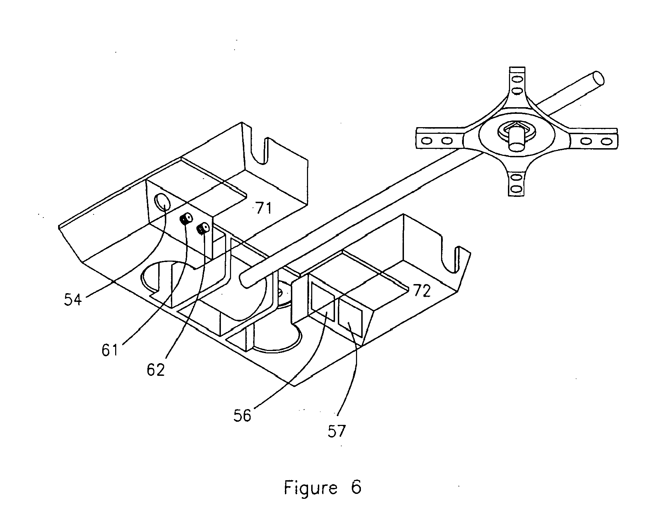

Figure 6 is a perspective view of the figure 5 embodiment suitable for the power center portion of the invention for use in an undercounter application in accordance with the present invention including a cable management option. This embodiment is identical to that of figure 5 with the exception of the addition of cable management housing 71 and cable management housing 72. Cable management housing 71 aids in managing coaxial cables connected to connectors 61 and 62 and the power cord in grommet 54. Cable management housing 72 aids in managing power cords connected to outlets 56 and 57.

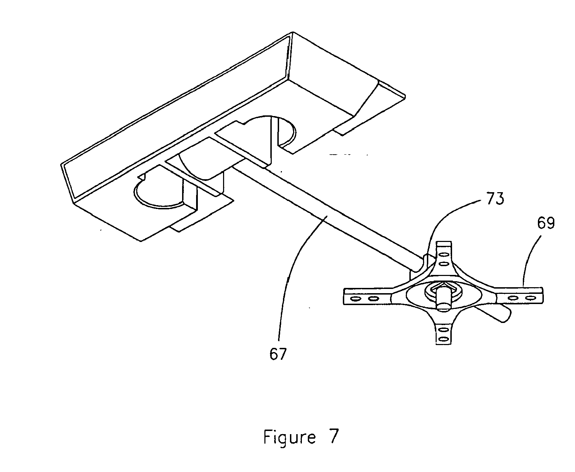

Figure 7 is a perspective view of the figure 5 embodiment suitable the power center portion of the invention for use in an undercounter or ceiling application in accordance with the present invention. This embodiment is identical to the figure 5 embodiment except that mounting plate 69 is pivotably attached to the end of bar 67 by means of a pivot 73. This embodiment is also particularly suitable for ceiling mounting of a projector.

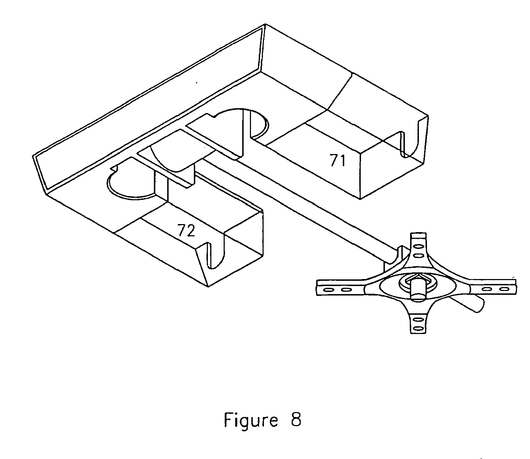

Figure 8 is a perspective view of the figure 7 embodiment suitable for the power center portion of the invention for use in an undercounter or ceiling application in accordance with the present invention including a cable management option. This embodiment is identical to that of figure 7 with the exception of the addition of cable management housing 71 and cable management housing 72. Cable management housing 71 aid is managing coaxial cables connected to connectors 61 and 62 and the power cord in grommet 54. Cable management housing 72 aids in managing power cords connected to outlets 56 and 57.

The present invention applies industrially to video data reproduction, particularly display of video information, flat screen monitors and projector device systems and methods. More particularly, the present invention applies industrially to implementations that combine mounting with power control methods and devices.

## Claims

1. A power center for use with video display devices comprising:
a housing for electronic circuitry adapted for attachment to a flat surface; and,
electronic circuitry in said housing for preventing electric surges and a means for connection to a source of electric current extending from said circuitry through said housing adapted for attachment to a source of electric power; and
at least one power outlet attached to said housing and said circuitry for providing power to a video display device; and
a mount attached to said housing for attaching a video display device, said mount allowing movement of a video display device attached to said mount relative to said housing.

2. A power center for use with video display devices as in claim 1, further comprising a means for protection of signals to a video display device attached to said mount.

3. A power center for use with video display devices as in claim 1 or 2, wherein said mount is adapted for attachment to a flat screen video display.

4. A power center for use with video display devices as in claim 1, 2 or 3, wherein said mount is adapted for attachment to a projector.

5. A power center for use with video display devices as in any one of the preceding claims, wherein said mount includes an arm pivotally attached to said housing allowing radial movement in at least one dimension and a mounting plate adapted for attachment to a video display.

6. A power center for use with video display devices as in claim 5, wherein said mounting plate is attached by a pivot allowing rotation of said mounting plate normal to the direction of rotation of said mounting plate normal to the direction of rotation of said arm.

7. A power center for use with video display devices as in claim 6, further comprising a third attachment allowing linear movement of said mounting plate along said arm.

8. A power center for use with video display devices as in claim 5, 6 or 7, further comprising a second arm pivotally attached between the end of said arm not attached to said housing and said mounting plate.

9. A power center for use with video display devices as in any one of the preceding claims, further comprising a means for providing a visual indication of the state of said circuitry.

10. A power center for use with video display devices as in any one of the preceding claims, wherein the electronic circuitry in said housing is selected from the group of, surge protection, voltage stabilization, conditioning, remote control, power monitoring, power cleaning, power filtering, IR/RF repeaters, amplifiers, networking, audio - video receivers and additional plug outlets.

11. A mount for use with video display devices comprising:
a housing for electronic circuitry adapted for attachment to a flat surface;
surge prevention circuitry in said housing and a means for connection to a source of electric current extending from said circuitry through said housing adapted for attachment to a source of electric power;
at least one power outlet attached to said housing and said circuitry for providing power to video display device; and
a mount attached to said housing for attaching a video display device, said mount allowing movement of a video display device attached to said mount relative to said housing.

12. A mount for use with video display devices as in claim 11, further comprising a means for protection of signals to a video display device attached to said mount.

13. A mount for use with video display devices as in claim 11, wherein said mount is adapted for attachment to a flat screen video display.

14. A mount for use with video display devices as in claim 11, wherein said mount is adapted for attachment to a projector.

15. A mount for use with video display devices as in claim 11, wherein said mount includes an arm pivotally attached to said housing allowing radial movement in at least one dimension and a mounting plate adapted for attachment to a video display.

16. A mount for use with video display devices as in claim 15, wherein said mounting plate is attached by a pivot allowing rotation of said mounting plate normal to the direction of rotation of said arm.

17. A mount for use with video display devices as in claim 16, further comprising a third attachment allowing linear movement of said mounting plate along said arm.

18. A mount for use with video display devices as in claim 16, further comprising a second arm pivotally attached between the end of said arm not attached to said housing and said mounting plate.

19. A mount for use with video display devices as in claim 11, further comprising a means for providing a visual indication of the state of said circuitry.

20. A mount for use with video display devices as in claim 11, wherein the electronic circuitry in said housing is able to provide one or more of the following functions, namely voltage stabilization, conditioning, remote control, power monitoring, power cleaning, power filtering, IR/RF repeating, amplification, networking, audio - video receiving and additional plug outletting.
